# EUROPÄISCHE PATENTSCHRIFT

(11) **EP 2 220 186 B1**
(45) Veröffentlichungstag und Bekanntmachung des Hinweises auf die Patenterteilung: **04.01.2017**
(21) Anmeldenummer: 08860390.7
(22) Anmeldetag: 25.11.2008
(51) Int. Cl.: C09J 123/02, C09J 123/08, B32B 27/32, B32B 7/06, B32B 7/12, B32B 27/08, B32B 27/30, B32B 27/34, B32B 27/36

(54) **COEXTRUDIERBARER SCHMELZKLEBSTOFF**
CO-EXTRUDABLE MELT ADHESIVE
ADHÉSIF THERMOFUSIBLE CO-EXTRUDABLE

(30) Priorität: 13.12.2007 DE 102007060533
(43) Veröffentlichungstag der Anmeldung: 25.08.2010
(73) Patentinhaber: Henkel AG & Co. KGaA, 40589 Düsseldorf (DE)
(72) Erfinder: HEEMANN, Marcus, 41468 Neuss (DE); PÜRKNER, Eckhard, 40595 Düsseldorf (DE); ERB, Volker, 40595 Düsseldorf (DE); SCHROEDER, Maja, 40882 Ratingen (DE); VIANDEN, Dirk, 40589 Düsseldorf (DE)
(86) Internationale Anmeldenummer: PCT/EP2008/066122
(87) Internationale Veröffentlichungsnummer: WO 2009/074450

(56) Entgegenhaltungen:
- WO-A-01/10967
- WO-A-97/33921
- US-A- 5 548 014
- US-A1- 2004 077 759

## Beschreibung

Die Erfindung betrifft die Verwendung eines Schmelzklebstoffes, der coextrudiert werden kann, zum Verkleben von zwei Folien, wobei diese Mehrschichtfolie in wiederverschließbaren Verpackungen eingesetzt werden kann.

Haftklebstoff (PSA) sind allgemein bekannt. Dabei handelt es sich um feste Klebstoffe, die nach Applikation eine an der Oberfläche haftklebrige Schicht ergeben. Solche Klebstoffe sind in Folienverpackungen bekannt, dabei werden dort Behälter an den Kanten mit solchen Klebstoffen beschichtet, die nach dem Öffnen einen erneuten Verschluss des Foliendeckels ermöglichen.

In der US 6107430 wird ein Schmelzklebstoff beschrieben, der mindestens ein lineares homogenes Ethylen/C₃ - C₂₀-α-Olefin-Copolymere enthält, das eine Dichte von 0,850 g/cm³ bis 0,895 g/cm³ aufweist. Dabei soll das Copolymer einen Schmelzindex von 200 bis 2000 g/10 min aufweisen. Als Wachse werden solche mit Schmelzpunkten von unter 126°C beschrieben.

Weiterhin ist die US 5530054 bekannt, in der ein Schmelzklebstoff beschrieben wird, der im wesentlichen aus einem Copolymer auf Basis von Ethylen und C₄ bis C₂₀-α-Olefinen besteht und ein Kohlenwasserstoff-Klebrigharz enthält. Die Ethylen/α-Olefin-Copolymere werden über Metallocene-Katalyse hergestellt. Die Menge dieser Harze liegt über 45 %. Eine Auswahl von Wachsen wird nicht beschrieben.

In der DE 199 44 225 werden sprühbare Schmelzklebstoffe beschrieben, die 30 bis 70 Gew.-% eines im wesentlichen amorphen Poly-α-Olefin-Copolymeren enthalten, wobei diese eine Dichte < 0,90 g/cm³ aufweisen sollen sowie eine niedrige Schmelzviskosität zwischen 1000 und 20000 mPas. Insbesondere werden Polyolefine beschrieben, die durch radikalischen Abbau von Poly-α-Olefinen hergestellt werden können.

In der EP 0886 656 werden Schmelzklebstoffe beschrieben, die als notwendige Bestandteile Ethlyen/α-Olefin-Copolymere enthalten sowie Klebrigharze. Es werden eine Vielzahl von optionalen Bestandteilen beschrieben, die Viskositäten der Klebstoffe sind aber niedrig, in den Beispielen meist unter 10 000 mPas. Spezielle in der Schmelze hochviskose Klebstoffe werden nicht beschrieben.

In der WO 2005/028584 werden Schmelzklebstoffe beschrieben, enthaltend Polyolefinpolymere hergestellt über Metallocene-Katalyse. Diese Polymere sollen eine Viskosität bis zu 9000 mPas aufweisen bei einer Temperatur von 149°C, der Schmelzklebstoff selbst eine Viskosität unterhalb 2000 mPas.

In der US 2004/077759 werden Haftschmelzklebstoffe beschrieben, die Styrolblockcopolymere der Strukturen ABA und AB und sowie ein Klebrigharz enthalten. Dabei sollen die Klebstoffe eine festgelegte Viskositätsgrenze bei 130°C überschreiten, sowie eine Reißfestigkeit aufweisen in Abhängigkeit von der Reißdehnung unterhalb einer angegebenen Messkurve.

Solche Haftschmelzklebstoffe werden im Allgemeinen bei Temperaturen von bis zu 160°C aufgetragen. Danach werden die betreffenden Substrate unter Druck, beispielsweise mit Walzen, miteinander verklebt. Diese Anwendungsverfahren sind jedoch vielstufig und erfordern aufwändige Maschinen. Andere Verfahren arbeiten mit Klebstoffen, die direkt bei der Herstellung der Folien bei erhöhter Temperatur coextrudiert werden können. Solche Klebstoffe müssen eine hohe thermische Stabilität aufweisen und eine geeignete Viskosität, damit diese im Rahmen der Folienextrusion eine gleichmäßige Schicht bilden können.

Alternative Herstellungsverfahren sind beispielsweise Blasverfahren. Dabei werden beide Folien parallel als Schlauch hergestellt, wobei zum Verkleben zwischen den Folien ein Klebstofffilm extrudiert wird. Dabei muss die Viskosität bei Extrusionstemperatur einen gleichmäßigen flüssigen Klebstofffilm ermöglichen. Da die Extrusion der Folienpolymere meist oberhalb von 180°C liegt, muss auch bei diesen Temperaturen ein kontinuierlicher stabiler Klebstofffilm herstellbar sein. Die Haftung zu den Substratfolien muss so gewählt werden, dass beim Herstellen einer Mehrschichtfolie eine ausreichende Verklebung ermöglicht wird. Andererseits soll bei einer Verwendung als Verpackungsfolie die Oberschicht abtrennbar sein, wobei eine haftklebrige Schicht auf der Oberschicht freigelegt wird.

Aufgabe der vorliegenden Erfindung ist es deswegen, einen Schmelzklebstoff für spezifische Verwendungen gemäß der vorliegenden Erfindung auf Basis von Polyethylen- oder Polypropylen-Copolymeren mit hoher thermischer Stabilität und gutem Verarbeitungsverhalten zur Verfügung zu stellen, der Folien, insbesondere auch Polyolefinfolien, verklebt und im Coextrusionsverfahren bei der Folienherstellung als Kaschierklebstoff eingesetzt werden kann. Dabei sollen im Klebstoff keine niedermolekularen migrierbaren Substanzen enthalten sein.

Die Aufgabe wird dadurch gelöst, dass ein Schmelzklebstoff zur Verfügung gestellt wird, enthaltend 30 bis 90 Gew.-% mindestens eines Copolymeren auf Basis Ethylen und/oder Propylen und C₄ bis C₁₂-α-Olefinen, das durch Metallocenkatalysierte Polymerisation erhältlich ist, mit einem melt Index von 5 bis 100 g/10 min (gemessen nach DIN ISO 1133 bei 190°C, 2,16 kg, 10 min), 5 bis 50 Gew.-% mindestens eines klebrigmachenden Harzes mit einem Erweichungspunkt von 80 bis 140°C, 0,5 bis 15 Gew.-% mindestens eines Wachses mit einem Schmelzpunkt von 120 bis 170°C , sowie 0,1 bis 20 Gew.-% Additive, wobei der Klebstoff eine Viskosität von 25000 bis 250000 mPas besitzt, gemessen bei einer Temperatur von 170 bis 190°C (EN ISO 2555). Bevorzugt soll die Summe der Bestandteile soll dabei 100 % ergeben.

Ein Verfahren zum Verkleben von Folien, welche im Blasverfahren hergestellt werden, mittels eines Schmelzklebstoffes gemäß der vorliegenden Erfindung wird offenbart. Ein weiterer Gegenstand der Erfindung ist die Verwendung solcher Klebstoffe zum Herstellen von Mehrschichtfolien für Verpackungen, wobei eine Verpackungsseite als aufreißbare Mehrschichtfolie ausgebildet ist, die nach dem Aufreißen an der geöffneten Stelle eine haftklebrige Oberfläche freilegt.

Im Folgenden wird der Schmelzklebstoff welcher in den spezifischen Verwendungen und Verfahren beansprucht wird als "erfindungsgemäß(er) Schmelzklebstoff(e) / Klebstoff(e)" bezeichnet.

Der erfindungsgemäße Schmelzklebstoff enthält mindestens ein Copolymer auf Basis von Ethylen und/oder Propylen zusammen mit C₄ bis C₁₂-α-Olefinen. Bei den Monomeren, die zusätzlich zu Ethylen und/oder Propylen eingesetzt werden können, handelt es sich um lineare oder verzweigte C₄ bis C₁₂-α-Olefine, wie Buten, Hexen, Methylpenten, Octen Dabei soll bevorzugt die Menge der Comonomere unterhalb 30 Gew.-% betragen. Es handelt sich dabei häufig um amorphe ataktische Polyolefine. Eine Ausführungsform der Erfindung verwendet Copolymere auf Basis von Ethylen mit C₄ bis C₁₂-α-Olefinen. Eine andere Ausführungsform verwendet Polymere aus Propylen mit C₄ bis C₁₂-α-Olefinen.
Die so erhaltenen Copolymere weisen ein Molekulargewicht von 1000 bis zu 250000 g/mol auf, insbesondere von 3000 bis zu 100000 g/mol, besonders bevorzugt oberhalb von 5000 g/mol (Molekulargewicht als Zahlenmittel, M_{N}, bestimmt über GPC).

Die geeigneten Copolymere, im Folgenden auch lediglich als Polymere bezeichnet, werden durch Katalyse mit Metallocen-Verbindungen hergestellt. Der Schmelzindex der Polymere soll von 5 g/10 min bis 100 g/10 min betragen, bevorzugt bis 40 g/10 min, insbesondere unter 30 g/min (gemessen bei 190 °C, 2,16 kg, DIN ISO 1133). Die Viskosität solcher Polymere ist bei den üblichen Anwendungstemperaturen von Schmelzklebstoff hoch. Der Erweichungspunkt der Polymere soll oberhalb von 130°C liegen, insbesondere oberhalb von 160°C. Die Menge dieser Copolymere beträgt 30 bis 90 Gew.-% bezogen auf dem Schmelzklebstoff, insbesondere zwischen 40 bis 80 Gew.-%.

Diese Polymere sind in der Literatur bekannt und können von verschiedenen Herstellern kommerziell erhalten werden.

Als weiteren Bestandteil enthält der erfindungsgemäße Schmelzklebstoff mindestens ein klebrigmachendes Harz. Das Harz bewirkt eine zusätzliche Klebrigkeit. Es wird in einer Menge von 5 bis 50 Gew.-%, bevorzugt 10 bis 40 Gew.-%, eingesetzt. Es handelt sich dabei insbesondere um Harze, die einen Erweichungspunkt zwischen 80 und 140°C (gemessen nach ASTM E28) besitzen. Es sind dieses z.B. aromatische, aliphatische oder cycloaliphatische Kohlenwasserstoff-Harze, sowie modifizierte oder hydrierte Derivate. Weitere im Rahmen der Erfindung einsetzbaren Harze sind Polyterpenharze, phenolisch oder aromatisch modifizierte Polyterpenharze, modifizierte Naturharze wie Harzsäuren aus Balsamharz, Tallharz oder Wurzelharz, ggf. auch Hydroabietylalkohol und dessen Ester, Acrylsäure-Copolymerisate, wie Styrol-Acrylsäure-Copolymere und Harze auf Basis funktioneller Kohlenwasserstoffharze. Bevorzugt ist es, teil- oder vollhydrierte Kohlenwasserstoffharze und Kolophoniumharze einzusetzen.

In einer besonderen Ausführungsform können zusätzlich 0 bis 15 Gew.-%, insbesondere bis 10 Gew.-% von Harzen eingesetzt werden, die einen Erweichungspunkt von 0 bis 50°C aufweisen, insbesondere bis 20°C. Bevorzugt handelt es sich dabei um hydrierte Kohlenwasserstoffharze.

Der erfindungsgemäße Haftschmelzklebstoff enthält Wachse in Mengen von 0,5 bis 15 Gew.-%, bevorzugt 0,5 bis 10 Gew.-%, insbesondere bis 5 Gew.-%. Die Menge ist dabei so bemessen, dass einerseits die Viskosität auf den gewünschten Bereich eingestellt wird, andererseits aber die Adhäsion nicht negativ beeinflusst wird. Das Wachs kann natürlichen, ggf. auch in chemisch modifizierter Form, oder synthetischen Ursprungs sein. Als natürliche Wachse können pflanzliche Wachse, tierische Wachse eingesetzt werden, auch Mineralwachse oder petrochemische Wachse. Als chemisch modifizierte Wachse können Hartwachse, wie Montanesterwachse, Sasolwachse usw., eingesetzt werden. Als synthetische Wachse finden Polyalkylenwachse sowie Polyethylenglykolwachse Verwendung. Das Wachs hat einen Schmelzpunkt von 120 bis 170°C (ASTM D 87). Ist der Schmelzpunkt zu niedrig, ist der erfindungsgemäße Klebstoff zu niedrigviskos. Vorzugsweise werden petrochemische Wachse, wie Petrolatum, Paraffinwachse, mikrokristalline Wachse, hydrierte oder synthetische Wachse, eingesetzt.

Zusätzlich zu den oben erwähnten Bestandteilen kann der Haftschmelzklebstoff noch 0,1 bis 20 Gew.-% üblicherweise in Schmelzklebstoffen eingesetzte Additive enthalten. Das sind beispielsweise Stabilisatoren, andere Polymere, Haftvermittler und/oder Antioxidantien. Damit können bestimmte anwendungstechnischen Eigenschaften, wie z. B. Kohäsionsfestigkeit, Viskosität, Erweichungspunkt, Fließverhalten, Haftung beeinflusst werden. Weiterhin können ggf. Füllstoffe zur Festigkeitserhöhung zugegeben werden.

Es kann sich bei den anderen Polymeren beispielsweise um elastische thermoplastische Polymere handeln. Unter solchen elastischen Polymeren sind insbesondere Styrol-Block-Copolymere zu verstehen, die elastische oder Kautschukelastische Eigenschaften aufweisen können. Es kann sich dabei um 2 Block- oder 3 Block-Copolymere handeln, die mindestens einen Styrol-Block aufweisen können. Beispiele dafür sind SBR, SAN, Styrol-Isopren-Copolymere (SIS), Styrol-Ethylen/Buthylen-Copolymere (SEBS), Styrol-Ethylen/Propylen-Copolymere (SEPS), Styrol-Isopren-Butylen-Copolymere (SIBS), Strylol-Butadien-Copolymere (SBS), hydrierte Styrol-Butylen-Butadien-Copolymere (SBBS). Solche Block-Copolymere sind dem Fachmann bekannt und kommerziell erhältlich. Über die Länge der Styrol-Blöcke können die Eigenschaften des Block-Copolymeren beein-flusst werden.

Die Polymere sind vom Fachmann so auszuwählen, dass eine gute Verträglichkeit mit den anderen Bestandteilen des Schmelzklebstoffs gegeben ist. Die Menge der Copolymere kann bis 10 Gew.-% betragen, insbesondere können 0,1 bis 5 Gew.-% mindestens eines thermoplastischen Elastomeren enthalten sein.

In einer anderen Ausführungsform kann der Schmelzklebstoff zusätzlich mindestens ein Polymerisat auf Basis von Olefinen und (Meth)acrylsäureestern enthalten, das Carboxylgruppen und/oder Anhydridgruppen aufweist. Die Olefinmonomere können aus den bekannten C₂ bis C₅-Olefinen ausgewählt werden, insbesondere Ethylen oder Propylen. Die (Meth)acrylsäureester werden aus (Meth)Acrylestern mit niedermolekularen C₁ bis C₈-Alkanolen ausgewählt, insbesondere sind Methyl(meth)acrylat, Ethyl(meth)acrylat, Propyl(meth)acrylat, Butyl(meth)acrylat oder 2-Ethylhexyl(meth)acrylat einzeln oder im Gemisch geeignet. Das Copolymere muss noch Carboxylgruppen und/oder Anhydridgruppen aufweisen. Das kann durch Polymerisation mit entsprechenden funktionellen Monomeren geschehen oder durch nachträgliche Modifikation der Polyolefincopolymere. Beispielsweise ist es möglich, durch Oxidation COOH-Gruppen einzuführen. Weiterhin ist es möglich, durch radikalische Pfropfungsreaktionen, beispielsweise mit Maleinsäureanhydrid, COOH- oder Anhydrid-Gruppen in das Polymer einzuführen.

In einer bevorzugten Ausführungsform des Polymerisates handelt es sich jedoch um ein Terpolymer auf Basis von Olefinen und (Meth)acrylsäureestern zusammen mit Säuregruppen- oder Anhydridgruppen-haltigen ungesättigten Monomeren. Beispielsweise können diese Monomere ausgewählt werden aus copolymerisierbaren ungesättigten Monocarbonsäuren, wie (Meth)acrylsäure, Crotonsäure, Itaconsäure, Citraconsäure; ungesättigten Dicarbonsäuren, wie Malein- oder Fumarsäure, Halbester der Malein-/Fumarsäure mit C₁ bis C₈ -Alkanolen, Anhydriden solcher Säuren. Insbesondere geeignet sind Derivate der Maleinsäure. Geeignete Carboxylgruppen aufweisende Polymerisate sind kommerziell erhältlich und dem Fachmann bekannt.

Das Polymerisat soll ein Molekulargewicht (Mn) zwischen 3000 und 50000 g/mol aufweisen, insbesondere 8000 bis 25000 g/mol. Die Menge der COOH-/ Anhydrid-Gruppen soll zwischen 1 bis 100 mg KOH/g betragen, insbesondere zwischen 5 bis 50 mg KOH/g. Ist die Anzahl der Carboxylgruppen hoch, so ist die Verträglichkeit der Bestandteile des Schmelzklebstoffs problematisch, ist die Anzahl der Carboxylgruppen gering, wird die Haftung verschlechtert. Unabhängig von dem Molekulargewicht ist es zweckmäßig, dass der Schmelzindex des Polymerisats niedrig liegt. Der Schmelzindex des Polymerisats soll von 1 bis 400 g/10 min liegen, insbesondere von 50 bis 300 g/10 min betragen (DIN ISO 1133). Dabei soll der Erweichungspunkt von 50°C bis 150°C liegen, insbesondere von 90 bis 110°C. Die Menge der COOH-Gruppen tragenden Polymerisats soll zwischen 0 bis 15 Gew.-% betragen insbesondere zwischen 0,5 bis 10 Gew.-%.

Weichmacher werden üblicherweise zum Einstellen der Viskosität oder der Flexibilität verwendet und sind in dem erfindungsgemäßen Schmelzklebstoff im allgemeinen in einer Konzentration von 0 bis 15 Gew.-%, vorzugsweise in einer Konzentration unter 10 Gew.-%, enthalten. Geeignete Weichmacher sind medizinische Weißöle, naphtenische Mineralöle, Polypropylen-, Polybuten-, Polyisobutylen, Polyisopren-Oligomere, hydrierte Polyisopren- und/oder Polybutadien-Oligomere, Benzoatester, Phthalate, Adipate, pflanzliche oder tierische Öle und deren Derivate. Hydrierte Weichmacher werden beispielsweise ausgewählt aus der Gruppe der paraffinischen Kohlenwasserstofföle. Auch Polypropylenglykol und Polybutylenglykol, sowie Polymethylenglykol sind geeignet. Ggf. werden auch Ester als Weichmacher eingesetzt, z. B. flüssige Polyester und Glycerinester oder Weichmacher auf Basis aromatischer Dicarbonsäureester. Die Weichmacher sollen auch nach der Applikation stabil im Schmelzklebstoff vorliegen und nicht migrieren. Deswegen sind insbesondere Polypropylen-, Polybuten-, Polyisobutylen, Polyisopren-Oligomere, auch in hydrierter Form, geeignet. Eine andere Ausführungsform setzt keine Weichmacher ein.
Die Stabilisatoren haben die Aufgabe, die Klebstoffzusammensetzung während der Verarbeitung vor Zersetzung zu schützen. Hier sind insbesondere Antioxidantien zu nennen oder Lichtschutzmittel. Sie werden üblicherweise in Mengen bis zu 3 Gew.-%, vorzugsweise in Mengen von etwa 0,1 bis 1,0 Gew.-%, dem Schmelzklebstoff beigefügt.
Es können beispielsweise auch Farbstoffe oder Füllstoffe, wie Titandioxid, Talkum, Ton und dergleichen, enthalten sein.

Darüber hinaus kann der erfindungsgemäße Schmelzklebstoff Haftvermittler enthalten. Haftvermittler sind Stoffe, die die Adhäsion des Schmelzklebstoffs zu dem zu verklebenden Substrat verbessern. Insbesondere können Haftvermittler das Alterungsverhalten von Klebungen unter Einfluss von feuchter Atmosphäre verbessern. Typische Haftvermittler sind zum Beispiel Ethylen/Acrylamid-Comonomere, reaktive siliciumorganische Verbindungen oder Phosphorderivate.

Die Additive, wie Weichmacher, Stabilisatoren oder Haftvermittler, sind dem Fachmann bekannt. Es sind kommerzielle Produkte und der Fachmann kann sie entsprechend den gewünschten Eigenschaften auswählen. Dabei ist darauf zu achten, dass eine Verträglichkeit mit der Polymermischung gegeben ist.

Eine besondere Ausführungsform der Erfindung besteht aus
- 40 bis 80 Gew.-% Copolymere aus C₂ oder C₃ mit C₄ bis C₁₂-α-Olefinen, welche durch Metallocene-katalysierte Polymerisation erhältlich sind, mit einem melt index von 5 bis 100 g/10 min (DIN ISO 1133),
- 10 bis 40 Gew.-% klebrigmachende Harze mit einem Erweichungspunkt von 80 bis 140°C und ggf. Kohlenwasserstoffharze,
- 0,5 bis 10 Gew.-% von Wachsen mit einem Schmelzpunkt von 120 bis 170°C, insbesondere petrochemische oder hydrierte Wachse, sowie
- 0,1 bis 20 Gew.-% Additive,
wobei die Additive ausgewählt werden aus thermoplastischen Polymeren, Polymerisaten mit Carboxyl- oder Anhydridgruppen, Pigmenten, Weichmachern und/oder Stabilisatoren, wobei die notwendigen hohen Viskositäten erhalten werden, und wobei der Klebstoff eine Viskosität von 25000 mPas bis 250000 mPas gemessen bei einer Temperatur von 170 bis 190°C (EN ISO 2555) aufweist.

Der erfindungsgemäße Schmelzklebstoff wird durch Mischen hergestellt. Dabei können alle Komponenten gleichzeitig vorgelegt, erwärmt und dann homogenisiert werden, oder es werden zuerst die leichter schmelzenden Komponenten vorgelegt und gemischt, danach die weiteren Klebstoffbestandteile zugegeben und zum Schluss weitere Additive, die gegen Temperatur empfindlich sind, zufügt. Es ist auch möglich, den Schmelzklebstoff kontinuierlich in einem Extruder herzustellen. Nach dem Abfüllen oder Portionieren der vollständig homogenisierten Mischung lässt man diese abkühlen, wobei sie erstarrt. Der erfindungsgemäße Schmelzklebstoff ist von fester Konsistenz und frei von Lösemitteln. Verfahren zur Herstellung, Abfüllung und Verpackung erfindungsgemäßer Schmelzklebstoffe sind dem Fachmann bekannt. Er ist homogen in fester und flüssiger Phase, d.h. eine Schmelze ist klar und nicht opak oder trüb.

Die erfindungsgemäßen Schmelzklebstoffe weisen eine hohe Viskosität auf, die auf das Anwendungsverfahren abgestimmt ist. Dabei besitzen die Schmelzklebstoffe eine Viskosität von 25000 bis 250000 mPas, vorzugsweise 30000 bis 150000 mPas, insbesondere mehr als 50000 mPas bei einer Temperatur im Bereich von 170°C bis 190°C (gemessen mit Brookfield Thermosel, Spindel 27, bei angegebener Temperatur, EN ISO 2555).

Der erfindungsgemäße Schmelzklebstoff ist haftklebrig. Wird er in dünner Schicht zwischen zwei Foliensubstraten aufgetragen, verklebt er diese. Bei einer mechanischen Belastung können diese Schichten jedoch wieder kohäsiv getrennt werden. Dabei bleibt die freigelegte Klebstoffschicht klebrig.

Das Applikationsverfahren ist abhängig von der Art des zu verklebenden Substrats und den geeigneten Maschinen dafür. Es kann sich um flächenförmigen Auftrag oder streifenförmigen Auftrag auf Folien handeln, welche nicht zum Gegenstand der vorliegenden Erfindung gehören. Das Auftragen kann beispielsweise durch Walzenauftragssysteme geschehen. Insbesondere ist ein erfindungsgemäßer Klebstoff aber zur Coextrusion mit zu kaschierenden Folien geeignet, welche nicht zum Gegenstand der vorliegenden Erfindung gehört. Dabei wird bei der Folienherstellung der Schmelzklebstoff mit der Folie coextrudiert. Danach wird eine zweite Folie auf die Klebstoffschicht aufgebracht und verklebt. Ein weiteres Verfahren, welches nicht zum Gegenstand der vorliegenden Erfindung gehört, ist die Blasextrusion. Dabei wird in einer Mehrfachringdüse zwischen zwei zu kaschierende Folien in Schlauchform ein kontinuierlicher Film des erfindungsgemäßen Klebstoff extrudiert. Das kann beispielsweise bei Temperaturen von 170 bis 230°C durchgeführt werden, insbesondere um 200°C. Beide äußeren Folien werden zusammengeführt und mit dem erfindungsgemäßen Klebstoff beim Abkühlen verklebt. Die Viskosität wird auf die Extrusionstemperatur abgestimmt. Ist die Viskosität des Klebstoffs zu gering, wird kein kontinuierlicher flüssiger Klebstofffilm erhalten und die flächige Verklebung ist fehlerhaft.

Die Zeit bis zum Verkleben der Substrate ist von Temperatur und Kristallisationsverhalten des Schmelzklebstoffes abhängig. Durch den erfindungsgemäßen Schmelzklebstoff werden gute Applikationseigenschaften erzielt. Auch bei längerem Verweilen in aufgeschmolzener Phase ist keine Separation einzelner Bestandteile oder Phasentrennung zu beobachten. Die Haftung zu den Substratfolien ist gut. Insbesondere die Haftung zu Mehrschichtfolien mit einer Poylolefinfolie als Schicht, insbesondere einer Polyethylenfolie, ist gut. Der flexible Verbund aus Substrat und Klebstoff ist auch bei Lagerung bei niedrigen Temperaturen gegeben.

Die herstellbaren Mehrschichtfolien können aus verschiedenen Folienschichten bestehen, die mit dem Schmelzklebstoff verbunden sind. Eine Folie soll bevorzugt eine Polyolefinfolie sein, insbesondere eine Polyethylenfolie. Diese soll als Siegelschicht geeignet sein. Die zweite Folienschicht ist üblicherweise als Außenschicht angeordnet. Diese Schicht soll reißfest sein, es können dabei andere flexible Kunststofffolien eingesetzt werden, beispielsweise aus Polyolefinen, Polyamiden, Polyestern oder PVC. Zweckmäßigerweise sollen die Folien coextrudiert werden. Es ist jedoch auch möglich, separat hergestellte Folien mit den erfindungsgemäßen Schmelzklebstoff und einer Polyolefinfolie zu verkleben. In diesem Fall können auch bedruckte oder metallisierte Folien verklebt werden. Die Mehrschichtfolien können danach auf bekannte Weise weiterverarbeitet werden. Beispielsweise können sie beschichtet, bedruckt und konfektioniert werden. Anschließend sind sie geeignet, als Verpackungsbestandteil weiterverarbeitet zu werden. Die mit einem erfindungsgemäßen Klebstoff kaschierten Folien zeigen eine gute Verträglichkeit und Stabilität der Bestandteile. Nach Verklebung und bei Kontakt mit Lebensmitteln bleiben mögliche migrationsfähigen Stoffe im Klebstoff gebunden. Niedermolekulare Bestandteile, die eine erhöhte Migration und Extrahierbarkeit aufwiesen, werden erfindungsgemäß vermieden. Deswegen können keine entsprechenden Substanzen aus der Folienoberfläche migrieren. Beim Kontakt mit Lebensmitteln werden diese nicht durch Inhaltsstoffe der Mehrschichtfolie beeinflusst. Bevorzugt enthalten die Klebstoffe und die verklebten Substrate keine migrationsfähigen Bestandteile (messbar nach EU Richtlinie 82/711/EWG).

Die erfindungsgemäßen Schmelzklebstoffe werden zum Kaschieren von Mehrschichtfolien verwendet. Sie sind insbesondere zum Verkleben von flexiblen Folien aus Polyethylen, Polypropylen geeignet. Die mit einem erfindungsgemäßen Schmelzklebstoff verklebten Mehrschichtfolien sind zum Herstellen von Verpackungen, insbesondere widerverschließbare Verpackungen, in der Lebensmittelindustrie geeignet. Dabei werden aus Kunststoffen Behältern ausgeformt, die nach der Befüllung mit dem Verpackungsgut mit einer Mehrschichtfolie als Deckel verschlossen werden. Das wird üblicherweise durch Heiß- oder Kaltversiegeln durchgeführt. Bei Öffnung der Verpackung wird die Mehrschichtfolie an der Siegelstelle zwischen den Folienschichten zerstört, es entsteht auf dem Behälterrand eine freie Schicht des erfindungsgemäßen dauerklebrigen Haftklebstoffs. Dieser kann mit der Deckelfolie reversibel wiederverschlossen werden.

Durch eine lange Offenzeit und hohe Schmelzviskosität des erfindungsgemäßen Klebstoffs ist eine gute Verarbeitbarkeit, insbesondere in der Blascoextrusion, gewährleistet. Es sind kontinuierliche flüssige Klebstofffilme herstellbar, die unmittelbar danach in der Wärme mit den beiden coextrudierten Folien zusammengeführt werden können. Nach dem Abkühlen werden verklebte Mehrschichtfolien erhalten. Die erfindungsgemäßen Schmelzklebstoffe zeichnen sich insbesondere durch eine sehr gute Adhäsion auf den vorgenannten Substratfolien aus. Die so hergestellten Verbundfolien bleiben auch bei niedriger Temperatur flexibel, zeigen aber auch in der Wärme eine gute Stabilität.

Die vorliegende Erfindung wird nachfolgend durch Beispiele näher erläutert.

### Beispiele:

### Beispiel 1 (Vergleich):

| | | |
|---|---|---|
| 35 Teile | Ethylen/1-Octen Copolymer | (Affinity GA 1950) |
| 45 Teile | Klebrigharz, Kohlenwasserstoffharz | (I-Marv P-125) |
| 20 Teile | Paraffinwachs | (Sasolwachs H 1) |

### Beispiel 2:

| | | |
|---|---|---|
| 50 Teile | Ethylen/1-Octen Copolymer | (Exact 8230) |
| 30 Teile | Klebrigharz, Kohlenwasserstoffharz | (Regalite S 1100) |
| 3 Teile | Ethylen/Ethylacrylat/MSA-Terpolymer | (Lotader 8200) |
| 2 Teile | Paraffinwachs | (Sasolwachs R 2531) |
| 15 Teile | Weichmacher | (Vistanex PAR 1300) |

| | |
|---|---|
| Exact 8230 | MFI 30 g/10min |
| Regalite S 1100 | Erweichungspunkt 100°C |
| Vistanex PAR 1300 | 10°C Schmelzpunkt |
| Affinity GA 1950 | MFI 500 g/10 min |
| Sasolwachs H1 | Schmelzpunkt 55°C (ASTM D 87) |
| Sasolwachs R 2531 | Schmelzpunkt 130°C |

### Verfahren:

Die Bestandteile werden in einem handelsüblichen Laborrührgerät bei 180°C aufgeschmolzen und gerührt, bis sie homogen sind. Danach werden sie zum Abkühlen in geeignete Gefäße abgefüllt.

| Ergebnisse: | | |
|---|---|---|
| Beispiel | 1 | 2 |
| Schmelzstabilität | ja | ja |
| Viskosität (mPas) | 1600 (160°C) | 68000 (190°C) |

Verkleben auf ca. 50 µm Folien,
Auftragen mit einem Rakel bei 180°C,
Schichtdicke ca. 20 µm

Es wurde die Adhäsion bei 25°C und bei -10°C bestimmt durch Zugversuch an zwei verklebten Folien. Die Adhäsion war in allen Fällen gut. PE-Folie mit OPP-Folie, PE-Folie mit PP-Folie, PE-Folie mit PET-Folie,

| | |
|---|---|
| Viskosität: | angegebene Temperatur; Brookfield Thermosel, Spindel 27 |
| Schmelzstabil ität: | keine Phasenseparation bei 170°C nach 72 Std., geringe Viskositätsänderung |

Beim Auftragen der Beispiele 1 und 2 aus einer Breitschlitzdüse (180°C) ist mit dem Material des Vergleichsversuchs kein stabiler, frei fallender Film zu erhalten, dieser spaltet sich auf.

## Patentansprüche

1. Verwendung eines Schmelzklebstoffs zum Herstellen von Mehrschichtfolien für Lebensmittelverpackungen, wobei der Schmelzklebstoff für wiederverschließbare Verpackungen
a) 30 bis 90 Gew.% mindestens eines Copolymeren auf Basis von Ethylen und/oder Propylen zusammen mit C₄ bis C₁₂- α-Olefinen, das durch Metallocene-katalysierte Polymerisation erhältlich ist, mit einem melt index von 5 bis 100 g/10 min (DIN ISO 1133),
b) 5 bis 50 Gew.% von Klebrigharzen mit einem Erweichungspunkt von 80 bis 140°C,
c) 0,5 bis 15 Gew.% Wachse mit einem Schmelzpunkt von 120 bis 170°C, und
d) 0,1 bis 20 Gew.% Additive und Hilfsstoffe enthält und
wobei der Klebstoff eine Viskosität von 25000 mPas bis 250000 mPas gemessen bei einer Temperatur von 170 bis 190°C (EN ISO 2555) aufweist.

2. Verwendung nach Anspruch 1, **dadurch gekennzeichnet, dass** im Schmelzklebstoff zusätzlich bis zu 10 Gew.% eines hydrierten Kohlenwasserstoffharzes mit einem Erweichungspunkt von 0 bis 50°C enthalten sind.

3. Verwendung nach einem der Ansprüche 1 oder 2, **dadurch gekennzeichnet, dass** im Schmelzklebstoff bis zu 5 Gew.% UV-Stabilisatoren, Pigmente oder Haftvermittler als Additive enthalten sind.

4. Verwendung nach einem der Ansprüche 1 bis 3, **dadurch gekennzeichnet, dass** im Schmelzklebstoff zusätzlich bis zu 15 Gew.% Polyisobutylen enthalten sind.

5. Verwendung nach einem der Ansprüche 1 bis 3 **dadurch gekennzeichnet, dass** im Schmelzklebstoff keine Weichmacher enthalten sind.

6. Verwendung nach einem der Ansprüche 1 bis 5 **dadurch gekennzeichnet, dass** im Schmelzklebstoff 0,5 bis 10 Gew.-% eines Polymerisates auf Basis Olefin/(Meth)acrylester enthalten sind, das Anhydrid oder Carboxylgruppen aufweist.

7. Verwendung nach einem der Ansprüche 1 bis 6, **dadurch gekennzeichnet, dass** der Klebstoff ein Kolophonium-, Tallharz oder ein voll- oder teilhydriertes Kohlenwasserstoffharz enthält.

8. Verwendung nach einem der Ansprüche 1 bis 7, **dadurch gekennzeichnet, dass** der Klebstoff
a) 40 bis 80 Gew.% mindestens eines Copolymeren auf Basis von Ethylen und/oder Propylen zusammen mit C₄ bis C₁₂-α-Olefinen, das durch Metallocene-katalysierte Polymerisation erhältlich ist, mit einem melt index von 5 bis 40 g/10 min (DIN ISO 1133)
b) 10 bis 40 Gew.% Klebrigharze,
c) 0,5 bis 10 Gew.% Wachse,
d) 0,1 bis 20 Gew.% Additive und Hilfsstoffe enthält,
wobei die Summe der Bestandteile 100% ergeben soll.

9. Verwendung nach einem der Ansprüche 1 bis 8 **dadurch gekennzeichnet, dass** der Schmelzklebstoff keine migrationsfähigen Stoffe nach Richtlinie EU 82/711/EWG enthalten sind.

10. Verwendung nach einem der Ansprüche 1 bis 9 zum Verkleben von mindestens einer Polyolefinfolie, insbesondere Polyethylenfolie, mit einer weiteren Folie.

11. Verwendung nach einem der Ansprüche 1 bis 10 zum Herstellen von wiederverschließbaren Verpackungen.

## Claims

1. The use of a hot-melt adhesive for producing multi-layer films for food packaging, wherein the hot-melt adhesive for resealable packaging comprises:
a) from 30 to 90 wt.% of at least one copolymer that is obtained by metallocenecatalyzed polymerization, is based on ethylene and/or propylene together with C₄ to C₁₂-α-olefins and has a melt index of from 5 to 100 g/10 min (DIN ISO 1133);
b) from 5 to 50 wt.% of tackifying resins having a softening point of from 80 to 140 °C;
c) from 0.5 to 15 wt.% wax having a melting point of from 120 to 170 °C; and
d) from 0.1 to 20 wt.% additives and auxiliary agents; and
wherein the adhesive has a viscosity of from 25,000 mPas to 250,000 mPas measured at a temperature of from 170 to 190 °C (EN ISO 2555).

2. The use according to claim 1, **characterized in that** the hot-melt adhesive additionally contains up to 10 wt.% of a hydrogenated hydrocarbon resin having a softening point of from 0 to 50 °C.

3. The use according to claim 1 or 2, **characterized in that** the hot-melt adhesive contains up to 5 wt.% UV stabilizers, pigments or adhesion promoters as additives.

4. The use according to one of claims 1 to 3, **characterized in that** the hot-melt adhesive additionally contains up to 15 wt.% of polyisobutylene.

5. The use according to one of claims 1 to 3, **characterized in that** the hot-melt adhesive does not contain plasticizers.

6. The use according to one of claims 1 to 5, **characterized in that** the hot-melt adhesive comprises from 0.5 to 10 wt.% of a polymer based on olefin/(meth)acrylic ester that comprises anhydride or carboxyl groups.

7. The use according to one of claims 1 to 6, **characterized in that** the adhesive contains a rosin resin, a tall oil resin or a fully or partly hydrogenated hydrocarbon resin.

8. The use according to one of claims 1 to 7, **characterized in that** the adhesive contains:
a) from 40 to 80 wt.% of at least one copolymer that is obtained by metallocenecatalyzed polymerization, is based on ethylene and/or propylene with C₄ to C₁₂-α-olefins and has a melt index of from 5 to 40 g/10 min (DIN ISO 1133);
b) from 10 to 40 wt.% tackifying resin;
c) from 0.5 to 10 wt.% wax; and
d) from 0.1 to 20 wt.% additives and auxiliary agents,
wherein the sum of the components should be 100 %.

9. The use according to one of claims 1 to 8, **characterized in that** the hot-melt adhesive does not contain any migratable substances according to EU Directive 82/711/EEC.

10. The use according to one of claims 1 to 9 for adhering at least one polyolefin film, in particular a polyethylene film, to another film.

11. The use according to one of claims 1 to 10 for producing resealable packaging.

## Revendications

1. Utilisation un adhésif fusible pour la fabrication de films multicouches destinés à des emballages alimentaires, l'adhésif fusible destiné à des emballages refermables contenant
a) 30 à 90% en poids d'au moins un copolymère à base d'éthylène et/ou de propylène conjointement avec des α-oléfines en C₄ à C₁₂, qui est obtenu par polymérisation catalysée par un métallocène, avec un indice de fluidité à chaud de 5 à 100 g/10 min (DIN ISO 1133),
b) 5 à 50% en poids de résines adhérentes ayant un point de ramollissement de 80 à 140°C,
c) 0,5 à 15% en poids de cires ayant un point de fusion de 120 à 170°C, et
d) 0,1 à 20% en poids d'additifs et de substances auxiliaires et
l'adhésif ayant une viscosité de 25000 mPas à 250000 mPas, mesurée à une température de 170 à 190°C (EN ISO 2555).

2. Utilisation selon la revendication 1, **caractérisé en ce que** l'adhésif fusible contient en outre jusqu'à 10% en poids d'une résine hydrocarbonée hydrogénée ayant un point de ramollissement allant de 0 et 50°C.

3. Utilisation selon l'une des revendications 1 ou 2, **caractérisée en ce que** l'adhésif fusible contient comme additifs jusqu'à 5% en poids de stabilisants aux UV, de pigments ou de promoteurs d'adhérence.

4. Utilisation selon l'une des revendications 1 à 3, **caractérisée en ce que** l'adhésif fusible contient en outre jusqu'à 15% en poids de polyisobutylène.

5. Utilisation selon l'une des revendications 1 à 3, **caractérisée en ce que** l'adhésif fusible ne contient aucun plastifiant.

6. Utilisation selon l'une des revendications 1 à 5, **caractérisée en ce que** l'adhésif fusible contient 0,5 à 10% d'un polymère à base de (méth)acrylate d'oléfine qui comporte des groupes anhydride ou carboxyle.

7. Utilisation selon l'une des revendications 1 à 6, **caractérisée en ce que** l'adhésif contient une résine de colophane, une résine d'huile de pin ou une résine d'hydrocarbure partiellement ou entièrement hydrogénée.

8. Utilisation selon l'une des revendications 1 à 7, **caractérisée en ce que** l'adhésif contient
a) 40 à 80% en poids d'au moins un copolymère à base d'éthylène et/ou de propylène conjointement avec des α-oléfines en C₄ à C₁₂, qui peut être obtenu par polymérisation catalysé par un métallocène, avec un indice de fluidité à chaud de 5 à 40 g/10 min (DIN ISO 1133)
b) 10 à 40% en poids de résine adhérente,
c) 0,5 à 10% de cires,
d) 0,1 à 20% d'additifs ou de matières auxiliaires,
la somme des constituants étant de 100%.

9. Utilisation selon l'une des revendications 1 à 8, **caractérisée en ce que** l'adhésif fusible ne contient aucune substance pouvant migrer selon la Directive Européenne 82/711/CEE.

10. Utilisation selon l'une des revendications 1 à 9 pour coller au moins un film de polyoléfine, en particulier un film de polyéthylène, à un autre film.

11. Utilisation selon l'une des revendications 1 à 10 pour fabriquer des emballages refermables.
